# EUROPEAN PATENT SPECIFICATION

(11) **EP 4 657 839 B1**
(45) Date of publication and mention of the grant of the patent: **30.09.2026**
(21) Application number: 25177393.3
(22) Date of filing: 19.05.2025
(51) Int. Cl.: H04M 3/56

(54) **MULTI-SOURCE AUDIO COMMUNICATION SYSTEM**
AUDIOKOMMUNIKATIONSSYSTEM MIT MEHREREN QUELLEN
SYSTÈME DE COMMUNICATION AUDIO MULTI-SOURCE

(30) Priority: 30.05.2024 US 202418678202
(43) Date of publication of application: 03.12.2025
(73) Proprietor: Microsoft Technology Licensing, LLC, Redmond, WA 98052 (US)
(72) Inventor: HAJY, ALI, Redmond, 98052 (US); KLEMETS, ANDERS EDGAR, Redmond, 98052 (US)
(74) Representative: CMS Cameron McKenna Nabarro Olswang LLP

(56) References cited:
- US-A1- 2016 379 660
- US-A1- 2018 088 900

## Description

### BACKGROUND

Virtual meetings are an effective medium for enabling participants to interact and communicate remotely via a virtual meeting platform. A hybrid meeting combines elements of in-person meetings and virtual meetings, where some participants (local participants) attend the hybrid meeting in person at a local meeting location and one or more remote participants connect to the hybrid meeting using the virtual meeting platform. Sometimes in hybrid meetings, a side-chat or small group-discussion occurs between multiple local participants. For instance, a side-chat may transpire during a break in a meeting, or a meeting may include breakout sessions where small groups discuss certain topics. In such situations, local participants and remote participants may experience different levels of immersion in the hybrid meeting. For instance, remote participants may be limited in participating in a side-chat and/or small group-discussion, as opposed to local participants who are able to move around the local meeting location and interact with other local participants.

The patent publications US 2016/379660 and US 2018/088900 are examples of background art.

It is with respect to these and other considerations that examples have been made. In addition, although relatively specific problems have been discussed, it should be understood that the examples should not be limited to solving the specific problems identified in the background.

### SUMMARY

The invention is set out in the appended set of claims.

This summary is provided to introduce a selection of concepts in a simplified form that are further described below in the Detailed Description section. This summary is not intended to identify key features or essential features of the claimed subject matter, nor is it intended as an aid in determining the scope of the claimed subject matter.

The present technology provides for a system, method, and computer-readable medium for providing a selectable virtual listening position in a hybrid meeting (e.g., a meeting with both virtual and in-person participants). In examples, an audio map of a local meeting location is provided in a user interface to participant computing devices connected to a virtual meeting session. Via the audio map, a remote participant is able to select a position on the audio map as a virtual listening position in the local meeting location. The selected virtual listening position is correlated (e.g., assigned) to one or more microphones in the local meeting location. Audio captured by the one or more microphones correlated to the selected virtual listening position is prioritized for the remote participant, where prioritizing the audio causes the audio to be output by the remote participant's computing device at a higher level (e.g., volume or clarity) than audio captured by other microphones in the local meeting location. Thus, the remote participant is provided a user experience that enables the remote participant to engage in (e.g., listen in on and/or provide verbal communication in) a conversation occurring amongst one or more in-person attendees/participants at the local meeting location. Aspects of the present disclosure provide a selectable listening position enhances usability of virtual meeting platforms by increasing a level of immersion for remote participants of hybrid meetings. Additionally, prioritized audio may be provided to one or more services for additional processing, such as a language translation service. Thus, a remote participant is provided with content from a hybrid meeting that is in a format (e.g., language) tailored to the remote participant.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

The accompanying drawings, which are incorporated in and constitute a part of this disclosure, illustrate various aspects of the present invention. In the drawings:
**FIGURE 1** depicts a system for providing a selectable listening position in a hybrid meeting according to a first embodiment.
**FIGURE 2** depicts a system for providing a selectable listening position in a hybrid meeting according to a second embodiment.
**FIGURE 3A** depicts an audio map of a meeting location according to an example.
**FIGURE 3B** depicts a first example method of selecting a virtual listening position using the audio map of **FIGURE 3A****.**
**FIGURES 3C** and **3D** depict a second example method of selecting a virtual listening position using the audio map of **FIGURE 3A****.**
**FIGURE 3E** depicts an example method of muting a microphone via an audio map.
**FIGURE 3F** depicts an audio map of a meeting location according to another example.
**FIGURE 4** depicts an example method for providing a selectable listening position in a hybrid meeting.
**FIGURE 5** is a block diagram illustrating example physical components of a computing device with which aspects of the invention may be practiced.

### DETAILED DESCRIPTION

The following detailed description refers to the accompanying drawings. Wherever possible, the same reference numbers are used in the drawing and the following description to refer to the same or similar elements. While aspects of the invention may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the invention, but instead, the proper scope of the invention is defined by the appended claims. Examples may take the form of a hardware implementation, or an entirely software implementation, or an implementation combining software and hardware aspects. The following detailed description is, therefore, not to be taken in a limiting sense.

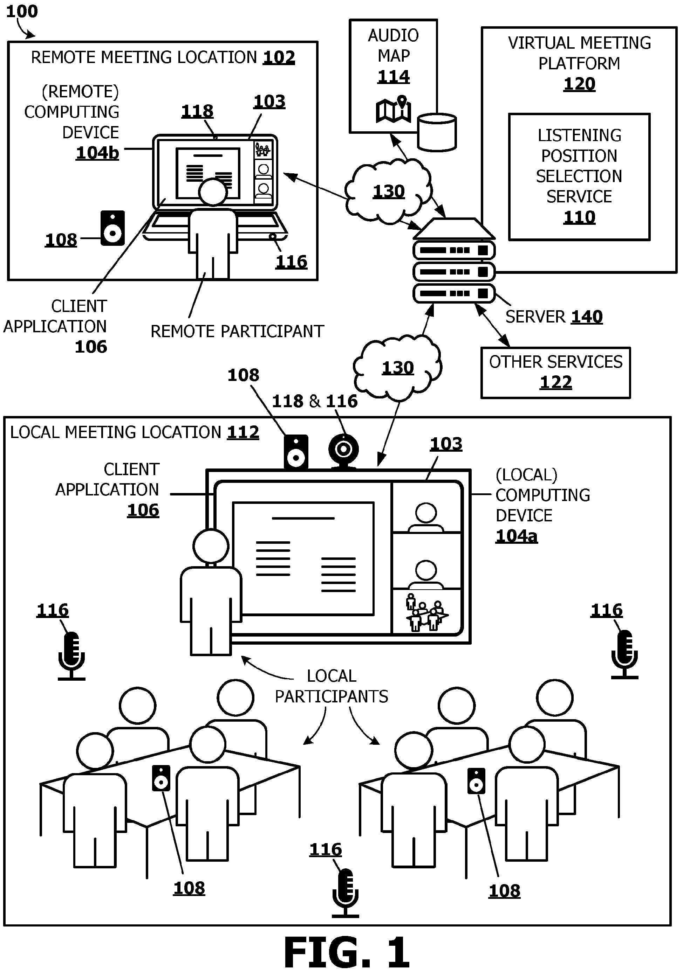

**FIGURE 1** depicts a first embodiment of an example system **100** for providing a selectable listening position in a hybrid meeting. The system **100** includes a virtual meeting platform **120** and a plurality of client computing devices **104a** and **104b** (collectively referred to as computing devices **104**). The computing devices **104** may take a variety of forms, including desktop computers, laptops, tablets, smart phones, wearable devices, gaming devices/platforms, virtualized reality devices/platforms (e.g., virtual reality (VR), augmented reality (AR), mixed reality (MR)), etc. Each of the computing devices **104** includes a client application **106** that allows for participation in, or connection to, a virtual meeting session hosted by the virtual meeting platform **120.** The client application **106** may include a desktop application, mobile application, or a web browser. The virtual meeting platform **120** is a software-based service or application that provides online collaboration and communication via hosting a virtual meeting session between dispersed participants. In some implementations, the virtual meeting platform **120** is cloud-based (e.g., located on a server **140** in a distributed computing network **130,** such as the Internet). In some implementations, the virtual meeting platform **120** provides various features for communicating, such as video conferencing, audio conferencing, chat messaging, screen sharing, and/or other collaborative features to facilitate communication among participants who are in different physical locations. During the virtual meeting, audio and/or video is communicated between the computing devices **104** and the virtual meeting platform **120.** In some implementations, a virtual meeting session has various associated meeting details, such as a meeting title, a date and time of the meeting, a list of participants, a virtual meeting session link, duration of the meeting, and/or a meeting organizer/host. The virtual meeting session link is a web address that provides remote participants access to the virtual meeting session.

In some examples, the virtual meeting session is a hybrid meeting that combines elements of an in-person meeting and a virtual meeting. For instance, in a hybrid meeting, some participants (referred to herein as local participants) attend the meeting in person at a local meeting location **112** and one or more remote participants connect to the meeting from one or more remote meeting locations **102** using the virtual meeting platform **120.** The example system implementation depicted in **FIGURE 1** includes local participants connected to the virtual meeting session via a local computing device **104a** operating at the local meeting location **112** and a remote participant connected to the virtual meeting session via a remote computing device **104b** operating at a remote meeting location **102.** The local meeting location **112** may include a meeting room, conference room, office space, or other place where one or more local participants can gather to have an in-person meeting. The remote location **102** is a location other than the local meeting location **112** (e.g., in a next room or at another premises).

According to examples, the local meeting location **112** includes a plurality of (local) microphones **116** located in various positions in the local meeting location **112** and that are connected to the local computing device **104a.** The microphones **116** capture audio in the local meeting location **112,** which is transmitted by the client application **106** on the local computing device **104a** to the virtual meeting platform **120** and further to remote participants connected to the virtual meeting session. The audio may be played by one or more speakers **108** connected to the remote computing device **104b.** In examples, audio captured by a microphone **116** at the local meeting location **112** includes spoken communication provided by one or more meeting participants (e.g., one or more local participants). In further examples, each microphone **116** captures audio within an audio zone, where the audio zone is a spatial area within which the microphone **116** can effectively capture audio. Characteristics (e.g., size and shape) of an audio zone may be based on predetermined shape and size, default microphone specifications (e.g., sensitivity, impedance, and/or pickup pattern) or known specifications of the associated microphone **116.** For instance, the effective capture of audio in an audio zone by a microphone **116** is related to a minimum threshold level of sound that is captured at a distance from the microphone **116.** In examples, the local meeting location **112** includes a plurality of audio zones. Different local participants at the local meeting location **112** may be located in different audio zones, where spoken communication provided by a first local participant may be received via a first microphone **116** in a first audio zone and spoken communication provided by a second local participant may be received via a second microphone **116** in a second audio zone. In some examples, two or more audio zones may overlap. For instance, the first local participant may be positioned in a spatial area where audio is captured by the first and second microphones **116.**

In some examples, the remote computing device **104b** further includes or is connected to a (remote) microphone **116** that captures audio (e.g., spoken communication) provided by the remote participant. Audio provided by the remote participant may be transmitted by the client application **106** operating on the remote computing device **104b** to the virtual meeting platform **120** and further to the local computing device **104a** and/or other devices connected to the virtual meeting session. For instance, audio provided by the remote participant may be transmitted to and played on one or more speakers **108** included in or connected to the local computing device **104a.**

In some examples, one or more computing devices **104** connected to the virtual meeting session include or are connected to one or more cameras **118.** For instance, a (local) camera **118** connected to the local computing device **104a** may capture video/images of one or more local participants, which are provided to the virtual meeting platform **120** and transmitted to the remote computing device **104b** and other computing devices **104** connected to the virtual meeting session. Similarly, a (remote) camera **118** connected to the remote computing device **104b** may capture video/images of the remote participant, which are provided to the virtual meeting platform **120** and transmitted to the local computing device **104a** and other computing devices **104** connected to the virtual meeting session. The computing devices **104** further include or are connected to one or more screens **103** on which a user interface (UI) of the client application **106** is displayed. In examples, the client application UI presents various meeting-related information, such as video/images captured by the cameras **118** and/or content shared by a participant (e.g., a document, a screen sharing activity, or a presentation), a transcript of captured audio, chat messages between participants, etc.

According to examples, the system includes a listening position selection service **110** that allows a participant, such as a remote participant, to select a virtual listening position in the local meeting location **112** from which to participate in a virtual meeting session. The listening position selection service **110** may be provided by the virtual meeting platform **120** and/or the client application **106.** In examples, the virtual listening position corresponds to a physical location in the local meeting location **112.** Selectable virtual listening positions allows the remote participant to virtually explore listening into the meeting from different positions in the local meeting location **112.** Consider, for example, a hybrid meeting where a side-chat or small group-discussion occurs between a group of local participants in a particular audio zone. The remote participant may notice (e.g., from video of the local meeting location **112**) a side-chat or small group-discussion taking place in the local meeting location **112** in which the remote participant wants to participate (e.g., at a minimum, listen to the side-chat or small group-discussion). Thus, a virtual listening position proximate to the side-chat or small group-discussion may be selected by the remote participant. By contrast, a default listening position for a remote participant is a composite of the audio captured by all the microphones **116** in the local meeting location **112.**

In an example implementation, an audio map **114** is obtained and provided to the remote participant in the client application UI for enabling the remote participant to select a desired virtual listening position. The audio map **114** is a two-dimensional (2D) representation of the local meeting location **112** and shows a physical layout of the local meeting location **112.** In different implementations, various levels of details are included in the audio map **114,** where in some examples the audio map **114** may show the perimeter of the local meeting location **112** and in other examples, additional details are included, such as a seating arrangement, audio/video equipment, and/or other features of the local meeting location **112.** According to an aspect, the audio map **114** includes location data (e.g., coordinates) of the physical locations of the microphones **116** in the local meeting location **112.** In some examples, the audio map **114** is generated by the virtual meeting platform **120** or a meeting resource service in communication with the virtual meeting platform **120** based on properties about the local meeting location **112** (e.g., dimensions of the room, locations (coordinates) of microphones **116,** locations of speakers **108,** and/or other properties). For instance, physical dimensions of the local meeting location **112** are translated into the graphical representation of the local meeting location **112.** In examples, this translation involves calculating a scale of the audio map **114** based on the size (e.g., physical dimensions) of the local meeting location **112.** The locations of microphones **116,** speakers **108,** and/or other equipment are graphically represented on the audio map **114** in one or more layers. These locations are determined by converting their physical locations (e.g., coordinates) in the local meeting location **112** into corresponding positions on the audio map **114.** In some examples, this conversion involves calculating relative distances and angles between the equipment and reference points in the local meeting location **112.** In further examples, manual input of properties about the local meeting location **112** is received (e.g., from a user of client application **106)** by the virtual meeting platform **120** or associated service to generate the audio map **114** based on the received properties. In some examples, the audio map **114** further includes graphical representations of audio zones associated with the microphones **116.** In examples, the graphical representations of the audio zones are based on translating specified or calculated characteristics (e.g., size and shape based on sensitivity, impedance, and/or pickup pattern of the associated microphones **116**) of an audio zone into corresponding positions on the audio map **114.** In some examples, indications of the locations of the microphones **116** and/or associated audio zones are not displayed. In further examples, the audio map **114** includes location data (e.g., coordinates) of the physical locations of speakers **108** in the local meeting location **112.** In yet further examples, a coverage area of the speakers **108** is also represented on the audio map **114.** The speaker coverage area may be calculated based on their power output and directionality.

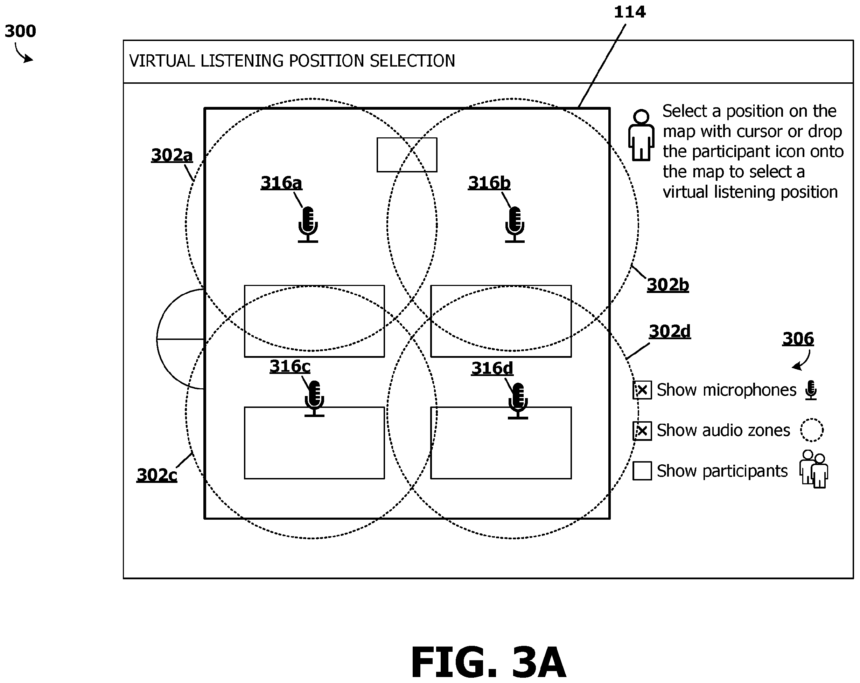

In an example implementation, the audio map **114** includes an interactive interface that allows a user (e.g., the remote participant) to select a specific point or area on the audio map **114** corresponding to a physical location in the local meeting location **112** as a virtual listening position. Selection of the virtual listening position may be performed by clicking on the specific point on the audio map **114,** moving an icon representing the remote participant onto the point, or via another method. The audio map **114** is described in further detail below with reference to **FIGURES 3A-3F****.** In examples, the selected virtual listening position is communicated to and received by the listening position selection service **110.** The listening position selection service **110** determines which audio zone the selected virtual listening position falls within by checking whether the selected virtual listening position intersects with, or is included in, the area covered by an audio zone. The listening position selection service **110** further correlates (e.g., assigns) the virtual listening position to the microphone **116** associated with the audio zone including the virtual listening position. Audio streams captured by the microphone **116** correlated (e.g., assigned) to the virtual listening position are prioritized for output to the remote participant. In examples, prioritizing audio (an audio stream) from a particular microphone **116** causes the prioritized audio to be output by a speaker **108** of the remote computing device **104b** at an increased level (e.g., volume or clarity) in comparison with audio received from other microphones **116** in the local meeting location **112.** Increasing clarity of audio, for instance, includes removing noise from the audio or otherwise making the audio more clear. In other implementations, prioritizing audio from a particular microphone **116** causes audio captured by the other (e.g., non-prioritized) microphones **116** in the local meeting location **112** to be muted or output by the remote computing device **104b** at a decreased level/volume. Accordingly, the remote participant may be able to hear a conversation taking place proximate to the selected virtual listening position.

In some examples, the listening position selection service **110** correlates (e.g., assigns) the virtual listening position to multiple microphones **116.** For instance, when the virtual listening position overlaps (e.g., is located in an area covered by) a plurality of audio zones, the listening position selection service **110** correlates (e.g., assigns) the virtual listening position to the multiple microphones **116** associated with the plurality of audio zones. In examples, the listening position selection service **110** assigns a weight to each of the multiple microphones **116.** The weight is based on a distance from the virtual listening position to each microphone **116.** For instance, the closer a microphone **116** is to the virtual listening position, the higher its weight. According to an aspect, a microphone **116** captures an audio stream (audio) and produces a channel of audio that is output by a speaker **108.** Multiple microphones **116** can be used to capture multiple audio streams to produce multiple channels of audio that are output by different speakers **108** (e.g., surround sound) or combined into a single stream played by one or more speakers **108.**

In examples, when multiple audio streams are captured by multiple microphones **116** in the local meeting location **112,** the audio streams captured by the one or more microphones **116** that are correlated to the virtual listening position are prioritized based on the weights (e.g., a higher weight is correlated to a higher/increased level of volume or clarity). Some example weight correlation methods that may be used include a weighted sum method, a weighted average method, a max weight method, or another method.

In some examples, the listening position selection service **110** receives a plurality of audio streams captured by a plurality of microphones **116,** prioritizes at least one audio stream based on the remote participant's selected virtual listening position, mixes the streams, and outputs a combined stream including the prioritized audio stream to the remote computing device **104b.** In other examples, the listening position selection service **110** communicates information about the remote participant's selected virtual listening position to the client application **106** of the local computing device **104a,** which prioritizes at least one received audio stream based on the weights, mixes the streams, and outputs a combined stream including the prioritized audio stream to the listening position selection service **110** to provide to the remote computing device **104b.** In other implementations, the client application **106** of the remote computing device **104b** and/or other computing devices **104** receives a plurality of audio streams, prioritizes at least one received audio stream based on the remote participant's selected virtual listening position, mixes the streams, and outputs a combined stream including the prioritized audio stream to a speaker **108.**

In examples, the remote participant may select to return to a default listening position (e.g., deselect the current virtual listening position) or select a different virtual listening position. When the listening position selection service **110** receives a selection of a new virtual listening position, a correlation is made between the newly selected virtual listening position and one or more audio zones and associated microphones **116,** and audio received from the microphones **116** that corresponds to the newly selected virtual listening position is prioritized for the remote participant.

In some implementations, the system **100** further includes one or more other services **122** that process prioritized audio corresponding to a virtual listening position and provide an output to the remote participant. One example other service **122** includes a transcription service that receives prioritized audio and uses speech recognition technology to convert the prioritized audio into text. In some examples, the prioritized audio is transcribed in realtime (e.g., near realtime) and is displayed in the client application UI **106.** Another example other service **122** includes a language translation service that receives prioritized audio and translates the audio from a first language to a second language. The translated audio may be transcribed and displayed in the client application UI **106** and/or played via a speaker **108**. Additional and/or alternative other services **122** are contemplated.

In some implementations, the audio map **114** is additionally displayed in the client application UI by the local computing device **104a.** When a virtual listening position is selected by a remote participant, an indication of the remote participant's virtual listening position is displayed on the audio map **114.** Accordingly, local participants at the local meeting location **112** are informed that spoken communication proximate to the virtual listening position may be heard by the remote participant.

In some implementations, one or more speakers **108** are located in one or more audio zones in the local meeting location **112.** When a virtual listening position is selected by a remote participant, the speaker(s) **108** in the audio zone(s) that intersect (e.g., include) the virtual listening position are prioritized for the remote participant. For instance, audio (e.g., spoken communication) provided by the remote participant is output by the prioritized speaker(s) **108,** allowing for a back-and-forth conversation between the remote participant and local participants in the audio zone(s).

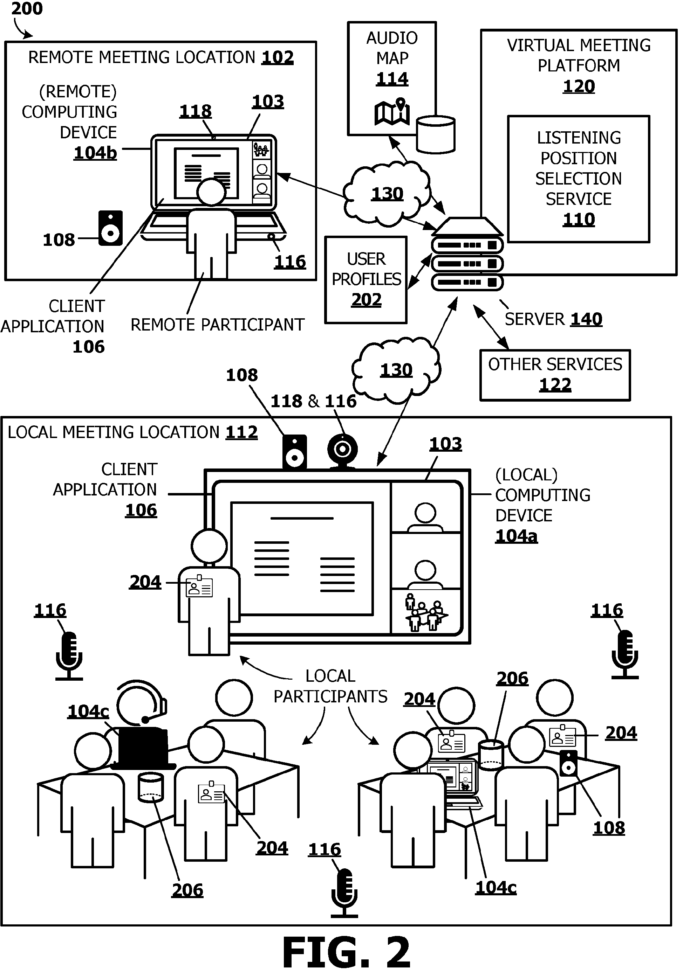

With reference now to **FIGURE 2****,** a second embodiment of an example system **200** for providing a selectable listening position in a hybrid meeting is depicted. In the second embodiment, participant presence detection is implemented at the local meeting location **112.** In examples, participant presence includes identity and location information of local participants, which is included in the audio map **114.** In some examples, video from one or more cameras **118** at the local meeting location **112** is analyzed to identify local participants. For instance, images of the local participants may be stored in user profiles **202** that are accessed by the listening position selection service **110.** Facial recognition is performed on images of the local participants in the video and compared against the user profile images to identify the local participants and locations of the local participants in the local meeting location **112.** For instance, locations of local participants in the video are mapped to physical locations in the local meeting location **112** and/or to coordinates in the audio map **114.** In other examples, a voice profile of each local participant may be stored in the user profiles **202** and compared against audio captured by the microphones **116** in the local meeting location **112** to identify the local participants. The location of a local participant may be determined based on a particular microphone **116** that captures audio of the participant's voice. For instance, if audio of a local participant's voice is captured by a particular microphone **116,** the local participant's location may be assigned to the particular microphone **116** or to the audio zone corresponding to the particular microphone **116.** In some examples, audio of a local participant's voice is captured by multiple microphones **116.** In such cases, the location of the local participant may be determined by sound localization methods (e.g., comparing and using the difference of arrival times of the audio of the local participant's voice at the multiple microphones to estimate a location of the local participant). In yet further examples, local participants may have identification (ID) badges **204** that are detected by one or more readers **206** using near-field communication technology, RFID technology, QR codes, etc. The ID badges **204** are used to identify the local participants and locations of the local participants in the local meeting location **112.** In further examples, one or more local participant computing devices **104c** are used by one or more local participants in the local meeting location **112** and are additionally connected to the virtual meeting session. In some examples, the one or more local participants are identified by login information provided to connect the local participant computing devices **104c** to the virtual meeting session. In yet further examples, the listening position selection service **110** receives a manual input of identities and locations of the local participants in the local meeting location **112.** For instance, the manual input may be received via the audio map **114** provided in the client application UI. In some implementations, in addition to the inclusion of identity and location information of local participants in the audio map **114,** additional information about local participants obtained from user profiles **202** (e.g., job title, contact information) is included.

**FIGURES 3A-3F** include illustrations of an audio map **114** according to examples. With reference now to **FIGURE 3A****,** an example audio map **114** is shown. The example audio map **114** is displayed in a UI **300** presented by the client application **106.** In some examples, the audio map **114** is displayed in response to a selection of an option to select a virtual listening position in a local meeting location **112** of a hybrid meeting. In some implementations, the audio map **114** is stored as information about the local meeting location **112.** For instance, information about the local meeting location **112** and, if applicable, other meeting locations (e.g., conference rooms) is stored in a data store and accessed by the virtual meeting platform **120** such that the local meeting location **112** (or another meeting location) can be scheduled for the meeting. In some examples, meeting location information is accessed via one or more application programming interfaces (APIs). The meeting location information may include details about the local meeting location **112,** such as a name of the local meeting location **112,** a physical location, capacity, dimensions/layout, audio video equipment information, scheduling information, and audio map information. In some implementations, the local meeting location **112** has a plurality of built-in microphones **116** (e.g., the microphones **116** have fixed locations, such as in a ceiling, wall, or furniture), where the locations of the built-in microphones **116** are stored in the meeting location information. In other implementations, the microphones **116** are moveable (e.g., not installed in the local meeting location **112**), where updated locations of the moveable microphones **116** may be configured by a user (e.g., input by the user at a time of use of the local meeting location **112)** and stored in association with the local meeting location **112.** In further implementations, a spatial range or coverage area of each microphone **116** (e.g., within which the microphone can effectively pick up audio) is known or estimated, and locations/coordinates of audio zones of the microphones **116** are determined based on the updated locations of the moveable microphones **116** and the known spatial ranges/coverage areas. For instance, the locations of audio zones of movable microphones **116** are updated. In some examples, the audio map **114** includes an outline of the local meeting location **112.** In other examples, the audio map **114** further includes microphone icons **316a-316d** (collectively, microphone icons **316**) representing one or more attributes (e.g., locations and/or activity, such as whether it is currently detecting audio input) of the microphones **116a-116d** in the local meeting location **112.** In further examples, the audio map **114** includes audio zone icons **302a-302d** (collectively, audio zone icons **302**) representing the audio zones associated with the microphones **116.** In some implementations, other known information is added to the audio map **114,** such as locations of local participants based on participant presence information. The audio map **114** may include representations of other information about the local meeting location **112,** such as seating arrangement information, locations of exits, etc. In examples, one or more options **306** are provided for enabling the remote participant to select which information is displayed on the audio map **114.**

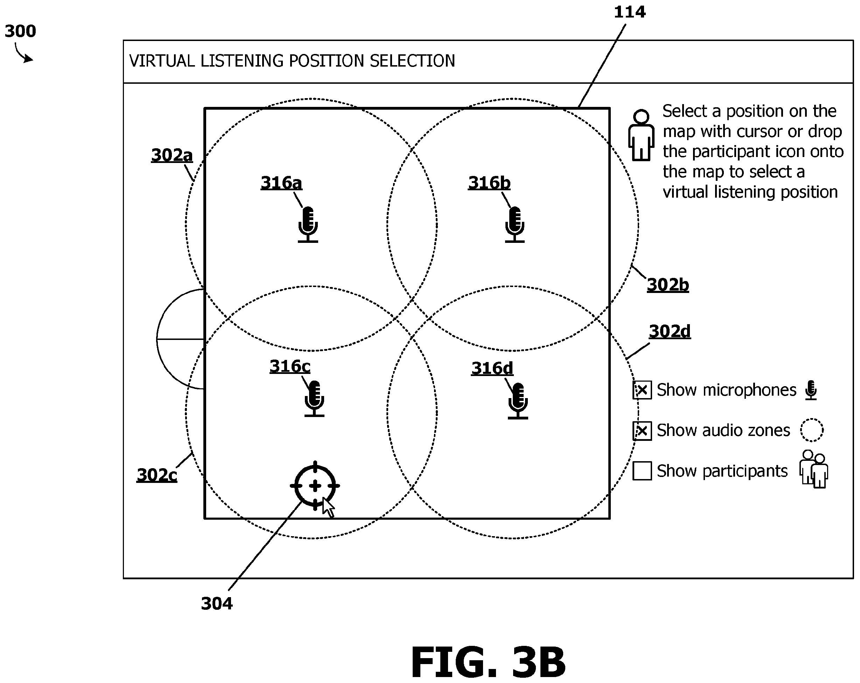

Aspects of the present disclosure provide for selection of a virtual listening position **304** on the audio map **114** by a remote participant. With reference now to **FIGURE 3B****,** a first example method of selecting the virtual listening position **304** is depicted. In **FIGURE 3B****,** the remote participant moves a pointer/cursor onto the audio map **114** and selects a position on the audio map **114** as the remote participant's selected virtual listening position **304** in the local meeting location **112.** Positions on the audio map **114,** and thus the selected virtual listening position **304,** correspond to a physical location in the local meeting location **112.** In the example shown in **FIGURE 3B****,** the selected virtual listening position **304** is determined to be located within a third audio zone (represented by a third audio zone icon **302c** on the audio map **114)** corresponding to a third microphone **116c** in the local meeting location **112.** Thus, the listening position selection service **110** correlates the virtual listening position **304** to the third microphone **116c** and prioritizes, for the remote participant, audio received by the third microphone **116c.**

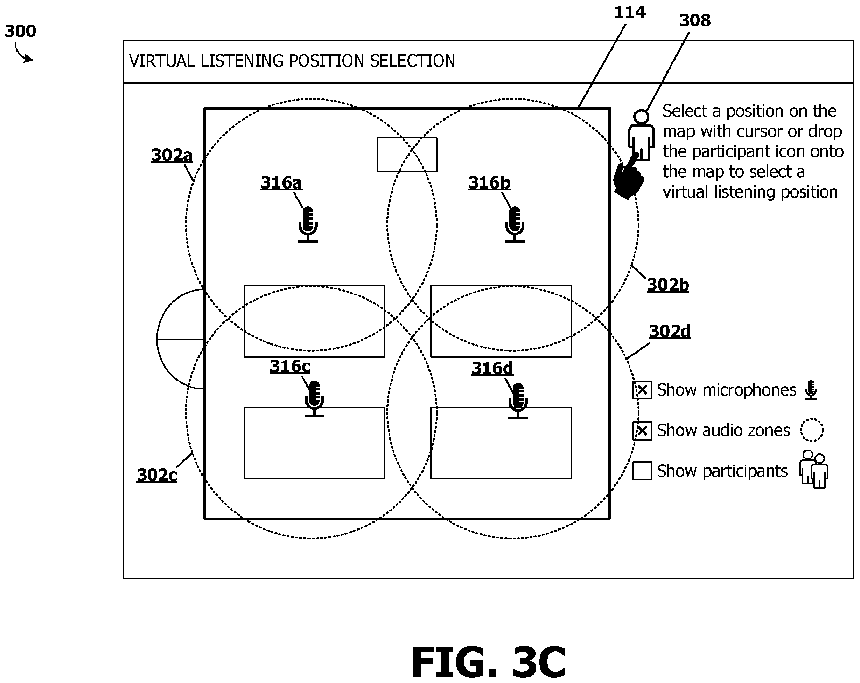

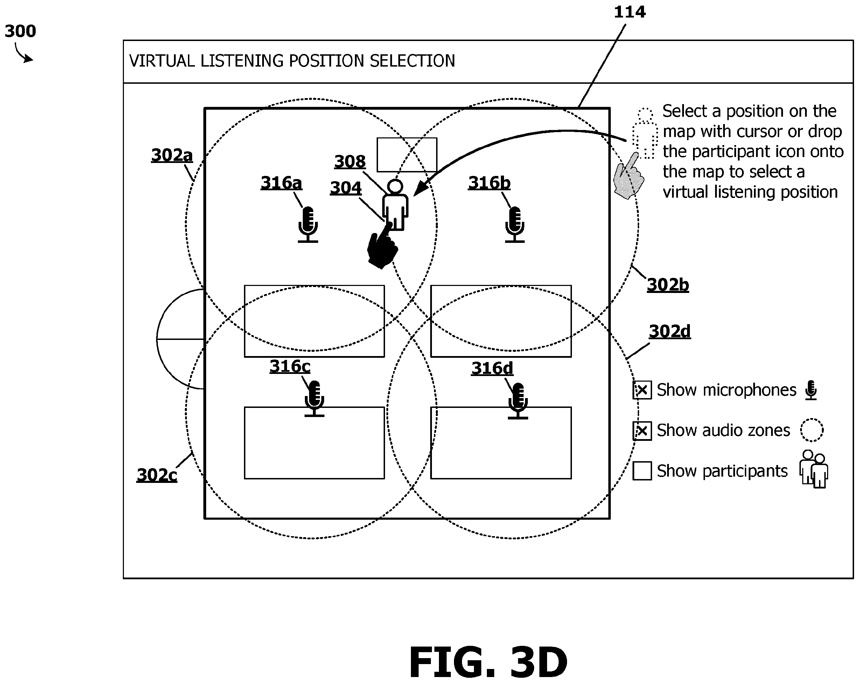

A second example method of selecting the virtual listening position **304** is depicted in **FIGURES 3C** and **3D****.** In **FIGURE 3C****,** a participant icon **308** representing the remote participant is provided in the UI **300** and selected by the remote participant. As shown in **FIGURE 3D****,** the participant icon **308** is dragged by the remote participant onto the audio map **114** and dropped on a position on the audio map **114** corresponding to a physical location in the local meeting location **112.** The selected position on the audio map **114** is received by the listening position selection service **110** and determined as the remote participant's selected virtual listening position **304** in the local meeting location **112.** In the example shown in **FIGURE 3D****,** the selected virtual listening position **304** is determined to be located within a first audio zone (represented by a first audio zone icon **302a**) corresponding to a first microphone **116a** and a second audio zone (represented by a second audio zone icon **302b**) corresponding to a second microphone **116b.** Accordingly, the listening position selection service **110** correlates the virtual listening position **304** to the first **116a** and second microphones **116b.** As depicted in **FIGURE 3D****,** the selected virtual listening position **304** is closer to the first microphone **116a.** Thus, the listening position selection service **110** correlates a higher weight to the first microphone **116a** and a lower weight to the second microphone **116b.** In an example, the listening position selection service **110** prioritizes, for the remote participant, audio received by the first microphone **116a** according to the higher weight and audio received by the second microphone **116b** according to the lower weight. Weights may be applied via one or a combination of methods (e.g., weighted sum method, a weighted average method, a max weight method). Other methods of selecting a virtual listening position are contemplated, such as via a selection of a microphone icon **316** or audio zone icon **302** displayed on the audio map **114.**

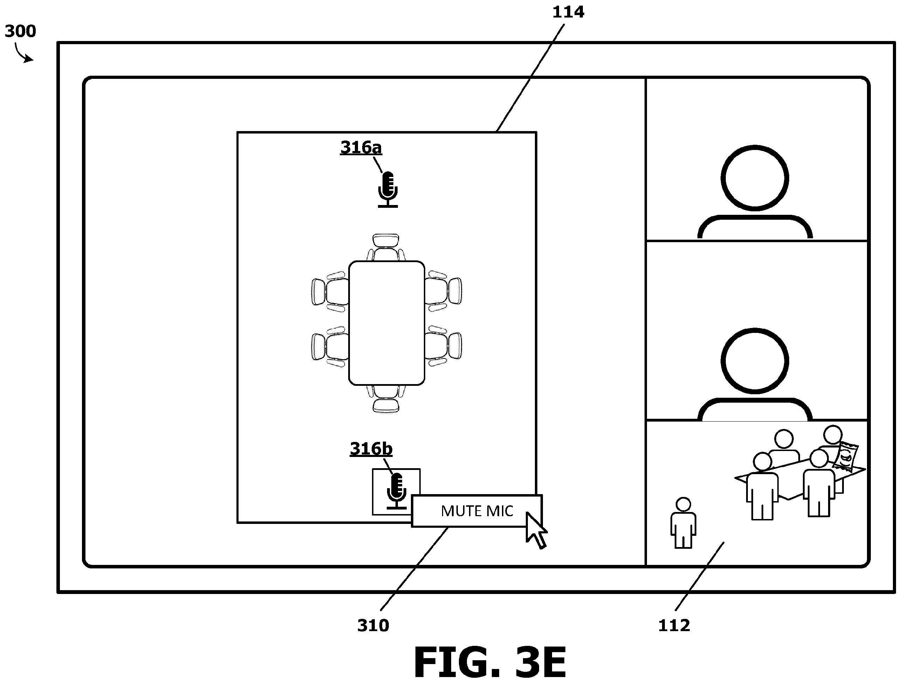

In some implementations, audio captured by one or more microphones **116** is prioritized via a selection to mute another one or more microphones **116** in the local meeting location **112.** For instance, and with reference now to **FIGURE 3E****,** background noise in an audio zone may be picked up by a second microphone **116b** in the local meeting location **112** (e.g., a local participant with a bag of chips next to the second microphone **116b**)**.** The remote participant may have difficulty hearing another local participant and may desire to mute the second microphone **116b.** In examples, microphone icons **316** displayed on the audio map **114** are selectable and have one or more associated options **310.** For instance, when a second microphone icon **316b** corresponding to the second microphone **116b** is selected by the remote participant, a mute option **310** may be presented. When selected, the listening position selection service **110** may mute, for the remote participant, audio captured by the second microphone **116b,** and thus prioritizes audio captured by other microphones **116** (a first microphone **116a**) in the local meeting location **112.**

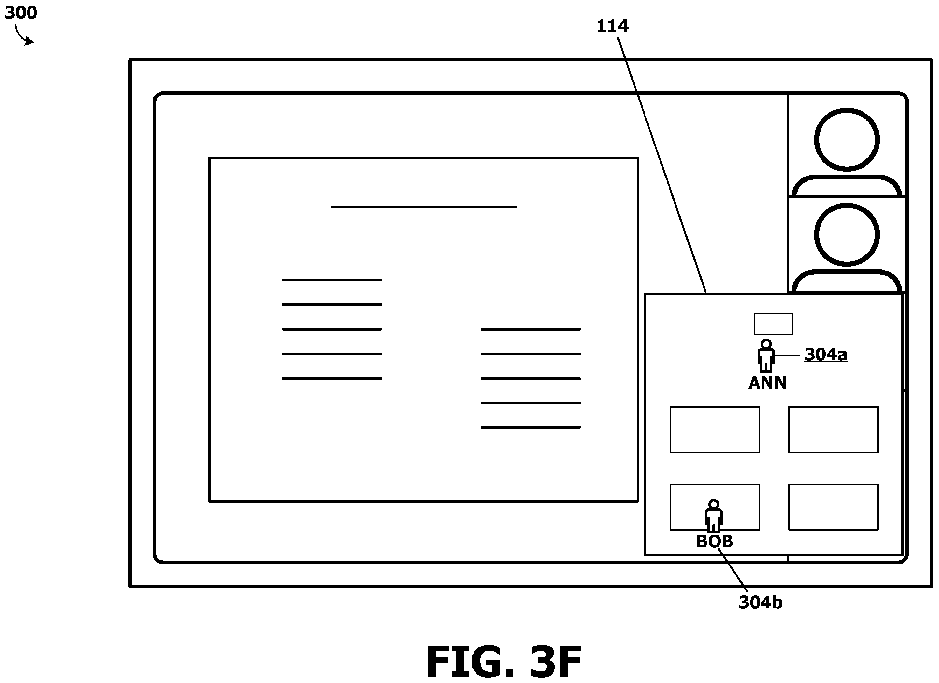

In some implementations, and as depicted in **FIGURE 3F****,** the audio map **114** includes indications of virtual listening positions **304a** and **304b** of one or more remote participants connected to the virtual meeting session. For instance, the example audio map **114** depicted in **FIGURE 3F** may be displayed in the UI **300** on the local computing device **104a** and/or one or more remote computing devices **104b.** The indications of virtual listening positions **304a** and **304b** provide information to the meeting participants about whether a remote participant may be listening in on a conversation occurring in the local meeting location **112.**

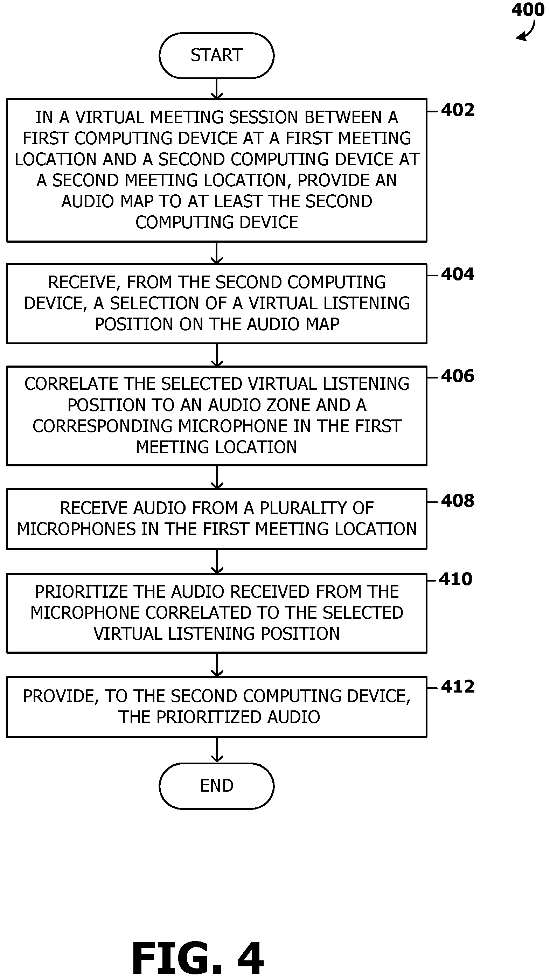

**FIGURE 4** is a flow diagram depicting an example method **400** for providing a selectable listening position in a hybrid meeting. The method **400** starts at operation **402,** where a virtual meeting session of the hybrid meeting is initiated between a first computing device **104a** and a second computing device **104b.** For example, the first computing device **104a** is a local computing device at a first meeting location (e.g., a local meeting location **112**) and the second computing device **104b** is a remote computing device used by a remote participant at a second meeting location (e.g., a location remote from the first meeting location). In examples, a plurality of local participants attends the hybrid meeting in person at the first meeting location. At operation **402,** an audio map **114** of the first meeting location is accessed (e.g., from storage) and is provided to at least the second computing device **104b.** In examples, the audio map **114** is a visual representation of the first meeting location. The audio map **114** may show a physical layout of the first meeting location and, in some examples, includes various details or features of the first meeting location based on known information about the first meeting location. Positions on the audio map **114** correspond to physical locations in the first meeting location. The audio map **114** further includes location data (e.g., coordinates) of the locations of a plurality of microphones **116** and/or associated audio zones of the microphones **116,** which may or may not be displayed. In some implementations, participant presence information is detected via one or more presence detection methods (e.g., facial recognition, voice recognition, user input) and indicators of identities and/or locations of one or more local participants are included in the audio map **114.** In examples, the audio map **114** is displayed in a client application UI **300** on at least the second computing device **104b.** In further examples, the audio map **114** is further displayed in a client application UI **300** on the first computing device **104a.**

At operation **404,** an indication of a selection of a virtual listening position **304** is received from the second computing device **104b.** The selection may be made via selecting a position on the audio map **114** with a cursor, dropping a participant icon **308** onto the position, selecting a microphone icon **316** or a corresponding audio zone icon **302** displayed on the audio map **114,** or via another selection method. In some examples, the audio map **114** provides a visual indication of a side conversation occurring. For example, a visual attribute of one or a combination of a microphone icon **316** or an audio zone icon **302** corresponding to a potential virtual listening position may change (e.g., blink, become highlighted or enlarged, or change color) to indicate that audio is being captured. In other examples, video of first meeting location captured by one or more cameras **118** at the first meeting location is presented in the client application UI **300** on the second computing device **104b.** The video may provide the remote participant a view of locations of local participants in the first meeting location. For instance, the remote participant may view the video to determine whether a side-chat or small group-discussion is occurring in the first meeting location that the remote participant wants to engage in a physical location in the first meeting location where the side-chat or small group-discission is occurring. The remote participant may select the virtual listening position **304** based on information ascertained from the audio map **114** and/or video.

At operation **406,** the selected virtual listening position **304** is correlated to one or more audio zones associated with one or more microphones **116** in the first meeting location. In some examples, the selected virtual listening position **304** is located in one audio zone and is correlated to one microphone **116.** In other examples, the selected virtual listening position **304** intersects a plurality of audio zones and is correlated to a plurality of microphones **116,** where the correlation includes applying a weight to each of the plurality of microphones **116** based on a distance from a physical location in the first meeting location that corresponds to the selected virtual listening position **304** to each of the plurality of microphones **116.** For instance, the correlation method includes applying a weight to each microphone **116** based on its distance from a physical location in the local meeting location **112** that corresponds to the virtual listening position **304.** Weighting is used to adjust the influence or importance of different microphones **116** in the final audio output and may be implemented using weighted sum method, a weighted average method, a max weight method, or another method. As an example, a first microphone **116** closer to the virtual listening position **304** is assigned a higher weight (more influence) than a second microphone **116** further away, which would have a lower weight (less influence). The weight applied to the first microphone **116** causes audio captured by the first microphone **116** to be output at a higher volume and/or with increased clarity to the remote participant over audio captured by the second microphone **116.**

At operation **408,** audio captured by one or more microphones **116** in the first meeting location is received. In some examples, the audio includes spoken communication provided by one or more local participants.

At operation **410,** the audio received from the one or more microphones **116** correlated to the selected virtual listening position **304** is prioritized for the second computing device **104b** and provided to the second computing device **104b** at operation **412.** In examples, prioritization of the audio causes the prioritized audio to be output by a speaker **108** of the second computing device **104b** at an increased level (e.g., volume or clarity) in comparison with audio received from other microphones **116** in the first meeting location. In examples, when audio from more than one microphone **116** is prioritized, the audio is prioritized according to applied weights, where higher-weighted audio is output at an increased level over lower-weighted audio. In some examples, audio received from other microphones **116** that are not correlated to the selected virtual listening position **304** is muted or otherwise output at a reduced level. Thus, the remote participant may be able to engage in the side-chat or small group-discussion taking place near the selected virtual listening position **304.** In some implementations, an indication of the remote participant's virtual listening position **304** is displayed on the audio map **114.** In further examples, the remote participant may choose to select a different virtual listening position **304** and the method **400** may return to operation **404,** where a selection of a new virtual listening position **304** is received.

As should be appreciated from the foregoing, the present technology provides multiple technical benefits and solutions to technical problems. For instance, participating remotely in a hybrid meeting generally includes various limitations in comparison to participating in-person, such as participation in a side-chat and/or small group-discussion occurring at the local meeting location **112** between local participants. The present technology enhances usability of virtual meeting platforms by increasing a level of immersion for remote participants of hybrid meetings. In examples, the listening position selection service **110** provides a remote participant access to an audio map **114** of the local meeting location **112** and allows the remote participant to select a position on the audio map **114** as the remote participant's virtual listening position **304.** The listening position selection service **110** correlates the selected virtual listening position **304** to one or more microphones **116** in the local meeting location **112** based on distance from the selected virtual listening position **304** to the microphones **116** and prioritizes the audio captured by those microphones **116** for the remote participant. The prioritized audio is output by the remote participant's computing device **104b** at an enhanced level (e.g., volume or clarity) compared to audio captured by other microphones **116** in the local meeting location **112.** Thus, the remote participant is provided a user experience that enables the remote participant to engage in (e.g., listen in on and/or provide verbal communication in) a conversation occurring amongst one or more in-person attendees/participants of the hybrid meeting at the local meeting location **112.** Additionally, prioritized audio may be provided to one or more services for additional processing, such as a language translation service. Thus, a remote participant is provided with content from a hybrid meeting that is in a format (e.g., language or dialect) tailored to the remote participant.

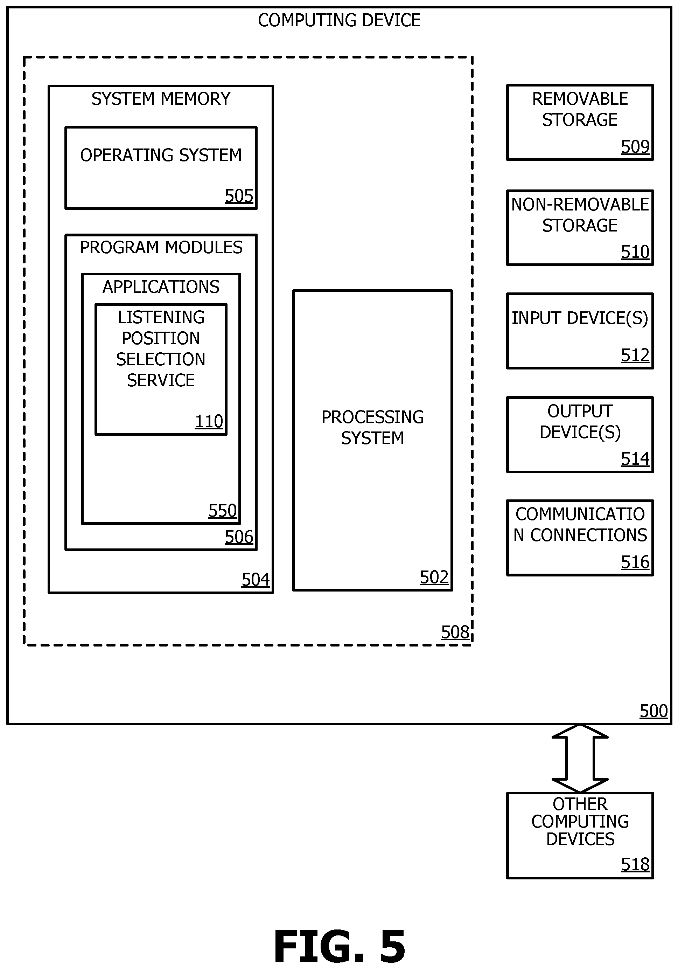

**FIGURE 5** is a block diagram illustrating physical components (e.g., hardware) of a computing device **500** with which aspects of the disclosure may be practiced. The computing device components described below may be suitable for the computing devices and systems described above. In a basic configuration, the computing device **500** includes at least one processing system **502** and a system memory **504.** Depending on the configuration and type of computing device, the system memory **504** comprises volatile storage (e.g., random access memory (RAM)), non-volatile storage (e.g., read-only memory (ROM)), flash memory, or any combination of such memories.

The system memory **504** includes an operating system **505** and one or more program modules **506** suitable for running software application **520,** such as the listening position selection service **110** or other of the one or more components supported by the systems described herein. The operating system **505,** for example, is suitable for controlling the operation of the computing device **500.**

Furthermore, embodiments of the disclosure may be practiced in conjunction with a graphics library, other operating systems, or any other application program and is not limited to any particular application or system. This basic configuration is illustrated in **FIGURE 5** by those components within a dashed line **508.** The computing device **500** may have additional features or functionality. For example, the computing device **500** may also include additional data storage devices (removable and/or non-removable) such as, for example, magnetic disks, or optical disks. Such additional storage is illustrated in **FIGURE 5** by a removable storage device **507** and a non-removable storage device **510.**

As stated above, a number of program modules and data files may be stored in the system memory **504.** While executing on the processing system(s) **502,** the program modules **506** (e.g., application **520**) may perform processes including the aspects described herein. Other program modules that may be used in accordance with aspects of the present disclosure include electronic mail and contacts applications, word processing applications, spreadsheet applications, database applications, slide presentation applications, drawing or computer-aided application programs, etc.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in **FIGURE 5** may be integrated onto a single integrated circuit. Such an SOC device may include one or more processing systems/units, graphics units, communications units, system virtualization units and various application functionality all of which are integrated (or "burned") onto the chip substrate as a single integrated circuit. When operating via an SOC, the functionality described herein with respect to the capability of a client to switch protocols, may be operated via application-specific logic integrated with other components of the computing device **500** on the single integrated circuit (chip). Embodiments of the disclosure may also be practiced using other technologies capable of performing logical operations such as, for example, AND, OR, and NOT, including mechanical, optical, fluidic, and quantum technologies. In addition, embodiments of the disclosure may be practiced within a general-purpose computer or in any other circuits or systems.

The computing device **500** also has one or more input device(s) **512** such as a keyboard, a mouse, a pen, a sound or voice input device, a touch or swipe input device, etc. The output device(s) **514** such as a display, speakers, a printer, etc. may also be included. The aforementioned devices are examples and others may be used. The computing device **500** may include one or more communication connections **516** allowing communications with other computing devices **550.** Examples of suitable communication connections **516** include radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory **504,** the removable storage device **507,** and the non-removable storage device **510** are all computer storage media examples (e.g., memory storage). Computer storage media includes RAM, ROM, electrically erasable ROM (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information, and which can be accessed by the computing device **500.** Any such computer storage media may be part of the computing device **500.** Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, communication media may include wired media such as a wired network or direct-wired connection, and wireless media such as acoustic, RF, infrared, and other wireless media.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure in any way. The aspects, examples, and details provided in this application are considered sufficient to convey possession and enable others to make and use the best mode of the disclosure. The scope of the invention is defined by the appended claims. Regardless of whether shown and described in combination or separately, the various features (both structural and methodological) of the description are intended to be selectively included or omitted to produce an embodiment with a particular set of features.

## Claims

1. A method (400), comprising:
receiving an indication of a virtual meeting session between a first computing device at a first meeting location and a second computing device at a second meeting location, wherein the first computing device is connected to a plurality of microphones positioned in the first meeting location;
providing (402), to the second computing device, an audio map of the first meeting location;
receiving (404), from the second computing device, a selection of a first virtual listening position on the audio map;
correlating (406) the selected first virtual listening position to a first microphone of the plurality of microphones by assigning a first weight to the first microphone based on a distance from the first virtual listening position to the first microphone;
receiving (408), from the first computing device, audio from the plurality of microphones in the first meeting location;
prioritizing (410) audio received from the first microphone over other audio received from the plurality of microphones based on the first weight; and
providing (412) the prioritized audio to the second computing device.

2. The method of claim 1, wherein prioritizing the audio received from the first microphone comprises causing the audio received from the first microphone to be output by a speaker at an increased level over the other audio received from the plurality of microphones.

3. The method of claim 1 or claim 2, wherein correlating the selected first virtual listening position to the first microphone further comprises:
correlating the first virtual listening position to the first microphone and a second microphone of the plurality of microphones;
assigning a second weight to the second microphone based on a distance from the first virtual listening position to the second microphone; and
prioritizing the audio received from the second microphone based on the second weight.

4. The method of claim 3, wherein prioritizing the audio comprises:
causing the audio received from the first microphone to be output at a first level based on the first weight; and
causing the audio received from the second microphone to be output at a second level based on the second weight.

5. The method of claim 1, wherein the audio map comprises, for each of the plurality of microphones:
location information about a physical location of the microphone; and
location information about an audio zone corresponding to a spatial area within which the microphone captures audio.

6. The method of claim 5, wherein correlating the selected first virtual listening position to the first microphone comprises determining the first virtual listening position is included in a first audio zone that corresponds to the first microphone.

7. The method of any one of the preceding claims, further comprising:
including, in the audio map, an indication of the first virtual listening position; and
providing the audio map to the first computing device for display in a user interface.

8. The method of any one of claims 1, 2, 4 to 7, further comprising:
receiving, from the second computing device, a selection of a second virtual listening position on the audio map;
correlating the selected second virtual listening position to a second microphone of the plurality of microphones;
receiving, from the first computing device, audio from the plurality of microphones in the first meeting location;
prioritizing the audio received from the second microphone; and
providing the prioritized audio to the second computing device.

9. The method of any one of the preceding claims, wherein:
prior to providing the prioritized audio to the second computing device:
providing the prioritized audio to a language translation service; and
receiving, from the language translation service, the prioritized audio translated from a first language into a second language; and
providing the prioritized audio to the second computing device comprises providing the translated prioritized audio to the second computing device.

10. The method of any one of the preceding claims, further comprising:
receiving location information about a physical location of a meeting participant in the first meeting location; and
including, in the audio map, an indication of the physical location of the meeting participant in the first meeting location.

11. The method of claim 10, wherein receiving the location information about the physical location of the meeting participant in the first meeting location comprises identifying the meeting participant using at least one of:
facial recognition on a video of the virtual meeting session;
voice recognition on the received audio;
an identification badge; or
manual input of the meeting participant's identity.

12. The method of any one of the preceding claims, further comprising:
receiving, from the second computing device, audio from a microphone in the second meeting location;
determining a speaker in the first meeting location is located proximate to the first microphone; and
causing the audio received from the microphone in the second meeting location to be output by the speaker located proximate to the first microphone.

13. A system (100), comprising:
a processing system (502); and
memory (504) comprising computer-executable instructions that, when executed, perform operations comprising:
receiving an indication of a virtual meeting session between a first computing device at a first meeting location and a second computing device at a second meeting location, wherein the first computing device is connected to a plurality of microphones positioned in the first meeting location;
providing (402), to the second computing device, an audio map of the first meeting location;
receiving (404), from the second computing device, a selection of a virtual listening position on the audio map;
correlating (406) the virtual listening position to a first microphone of the plurality of microphones;
receiving (408), from the first computing device, audio from the plurality of microphones in the first meeting location;
prioritizing (410) audio received from the first microphone over other audio received from the plurality of microphones; and
providing (412) the prioritized audio to the second computing device.

14. The system of claim 13, wherein prioritizing the audio received from the first microphone comprises causing the audio received from the first microphone to be output at an increased clarity over the other audio received from the plurality of microphones.

15. A computer-readable medium storing instructions that, when executed by a computer, cause the computer to:
receive an indication of a virtual meeting session between a first computing device at a first meeting location and a second computing device at a second meeting location, wherein the first computing device is connected to a plurality of microphones positioned in the first meeting location;
provide (402), to the second computing device, an audio map of the first meeting location;
receive (404), from the second computing device, a selection of a virtual listening position on the audio map;
correlate (406) the virtual listening position to a first microphone and a second microphone of the plurality of microphones;
receive (408), from the first computing device, audio from the plurality of microphones in the first meeting location;
prioritize (410) audio received from the first microphone and the second microphone over other audio received from the plurality of microphones; and
provide (412) the prioritized audio to the second computing device.

## Patentansprüche

1. Verfahren (400), umfassend:
Empfangen einer Angabe einer virtuellen Meeting-Sitzung zwischen einer ersten Rechenvorrichtung an einem ersten Meeting-Standort und einer zweiten Rechenvorrichtung an einem zweiten Meeting-Standort, wobei die erste Rechenvorrichtung mit einer an dem ersten Meeting-Standort positionierten Vielzahl von Mikrofonen verbunden ist;
Bereitstellen (402), an die zweite Rechenvorrichtung, einer Audiokarte des ersten Meeting-Standorts;
Empfangen (404), von der zweiten Rechenvorrichtung, einer Auswahl einer ersten virtuellen Hörposition auf der Audiokarte;
Korrelieren (406) der ausgewählten ersten virtuellen Hörposition mit einem ersten Mikrofon der Vielzahl von Mikrofonen durch Zuweisen einer ersten Gewichtung zu dem ersten Mikrofon basierend auf einem Abstand von der ersten virtuellen Hörposition zu dem ersten Mikrofon;
Empfangen (408), von der ersten Rechenvorrichtung, von Audio von der Vielzahl von Mikrofonen an dem ersten Meeting-Standort;
Priorisieren (410) von Audio, das von dem ersten Mikrofon empfangen wird, gegenüber anderem Audio, das von der Vielzahl von Mikrofonen empfangen wird, basierend auf der ersten Gewichtung; und
Bereitstellen (412) des priorisierten Audios an die zweite Rechenvorrichtung.

2. Verfahren nach Anspruch 1, wobei das Priorisieren des Audios, das von dem ersten Mikrofon empfangen wird, Veranlassen, dass das Audio, das von dem ersten Mikrofon empfangen wird, durch einen Lautsprecher mit erhöhter Lautstärke gegenüber dem anderen Audio, das von der Vielzahl von Mikrofonen empfangen wird, ausgegeben wird, umfasst.

3. Verfahren nach Anspruch 1 oder Anspruch 2, wobei das Korrelieren der ausgewählten ersten virtuellen Hörposition mit dem ersten Mikrofon ferner Folgendes umfasst:
Korrelieren der ersten virtuellen Hörposition mit dem ersten Mikrofon und einem zweiten Mikrofon der Vielzahl von Mikrofonen;
Zuweisen einer zweiten Gewichtung zu dem zweiten Mikrofon basierend auf einem Abstand von der ersten virtuellen Hörposition zu dem zweiten Mikrofon; und
Priorisieren des Audios, das von dem zweiten Mikrofon empfangen wird, basierend auf der zweiten Gewichtung.

4. Verfahren nach Anspruch 3, wobei das Priorisieren des Audios Folgendes umfasst:
Veranlassen, dass das Audio, das von dem ersten Mikrofon empfangen wird, basierend auf der ersten Gewichtung mit einer ersten Lautstärke ausgegeben wird; und
Veranlassen, dass das Audio, das von dem zweiten Mikrofon empfangen wird, basierend auf der zweiten Gewichtung mit einer zweiten Lautstärke ausgegeben wird.

5. Verfahren nach Anspruch 1, wobei die Audiokarte für jedes der Vielzahl von Mikrofonen Folgendes umfasst:
Standortinformationen über einen physischen Standort des Mikrofons; und
Standortinformationen über eine Audiozone, die einem Raumbereich entspricht, innerhalb dessen das Mikrofon Audio erfasst.

6. Verfahren nach Anspruch 5, wobei das Korrelieren der ausgewählten ersten virtuellen Hörposition mit dem ersten Mikrofon Bestimmen, dass die erste virtuelle Hörposition in einer ersten Audiozone einbezogen ist, die dem ersten Mikrofon entspricht, umfasst.

7. Verfahren nach einem der vorhergehenden Ansprüche, ferner umfassend:
Einbeziehen, in die Audiokarte, einer Angabe der ersten virtuellen Hörposition; und
Bereitstellen der Audiokarte an die erste Rechenvorrichtung zur Anzeige in einer Benutzerschnittstelle.

8. Verfahren nach einem der Ansprüche 1, 2, 4 bis 7, ferner umfassend:
Empfangen, von der zweiten Rechenvorrichtung, einer Auswahl einer zweiten virtuellen Hörposition auf der Audiokarte;
Korrelieren der ausgewählten zweiten virtuellen Hörposition mit einem zweiten Mikrofon der Vielzahl von Mikrofonen;
Empfangen, von der ersten Rechenvorrichtung, von Audio von der Vielzahl von Mikrofonen an dem ersten Meeting-Standort;
Priorisieren des Audios, das von dem zweiten Mikrofon empfangen wird; und
Bereitstellen des priorisierten Audios an die zweite Rechenvorrichtung.

9. Verfahren nach einem der vorhergehenden Ansprüche, wobei:
vor dem Bereitstellen des priorisierten Audios an die zweite Rechenvorrichtung:
Bereitstellen des priorisierten Audios an einen Sprachübersetzungsdienst; und
Empfangen, von dem Sprachübersetzungsdienst, des priorisierten Audios, das aus einer ersten Sprache in eine zweite Sprache übersetzt wird; und
das Bereitstellen des priorisierten Audios an die zweite Rechenvorrichtung Bereitstellen des übersetzten priorisierten Audios an die zweite Rechenvorrichtung umfasst.

10. Verfahren nach einem der vorhergehenden Ansprüche, ferner umfassend:
Empfangen von Standortinformationen über einen physischen Standort eines Meeting-Teilnehmers an dem ersten Meeting-Standort; und
Einbeziehen, in die Audiokarte, einer Angabe des physischen Standorts des Meeting-Teilnehmers an dem ersten Meeting-Standort.

11. Verfahren nach Anspruch 10, wobei das Empfangen der Standortinformationen über den physischen Standort des Meeting-Teilnehmers an dem ersten Meeting-Standort Identifizieren des Meeting-Teilnehmers unter Verwendung mindestens eines von Folgendem umfasst:
Gesichtserkennung auf einem Video der virtuellen Meeting-Sitzung;
Spracherkennung auf dem empfangenen Audio;
einem Identifizierungsausweis; oder
manueller Eingabe der Identität des Meeting-Teilnehmers.

12. Verfahren nach einem der vorhergehenden Ansprüche, ferner umfassend:
Empfangen, von der zweiten Rechenvorrichtung, von Audio von einem Mikrofon an dem zweiten Meeting-Standort;
Bestimmen, dass sich ein Lautsprecher an dem ersten Meeting-Standort in der Nähe zu dem ersten Mikrofon befindet; und
Veranlassen, dass das Audio, das von dem Mikrofon an dem zweiten Meeting-Standort empfangen wird, durch den Lautsprecher, der sich in der Nähe des ersten Mikrofons befindet, ausgegeben wird.

13. System (100), umfassend:
ein Verarbeitungssystem (502); und
Speicher (504), der computerausführbare Anweisungen umfasst, die bei Ausführung Vorgänge durchführen, umfassend:
Empfangen einer Angabe einer virtuellen Meeting-Sitzung zwischen einer ersten Rechenvorrichtung an einem ersten Meeting-Standort und einer zweiten Rechenvorrichtung an einem zweiten Meeting-Standort, wobei die erste Rechenvorrichtung mit einer an dem ersten Meeting-Standort positionierten Vielzahl von Mikrofonen verbunden ist;
Bereitstellen (402), an die zweite Rechenvorrichtung, einer Audiokarte des ersten Meeting-Standorts;
Empfangen (404), von der zweiten Rechenvorrichtung, einer Auswahl einer virtuellen Hörposition auf der Audiokarte;
Korrelieren (406) der virtuellen Hörposition mit einem ersten Mikrofon der Vielzahl von Mikrofonen;
Empfangen (408), von der ersten Rechenvorrichtung, von Audio von der Vielzahl von Mikrofonen an dem ersten Meeting-Standort;
Priorisieren (410) von Audio, das von dem ersten Mikrofon empfangen wird, gegenüber anderem Audio, das von der Vielzahl von Mikrofonen empfangen wird; und
Bereitstellen (412) des priorisierten Audios an die zweite Rechenvorrichtung.

14. System nach Anspruch 13, wobei das Priorisieren des Audios, das von dem ersten Mikrofon empfangen wird, Veranlassen, dass das Audio, das von dem ersten Mikrofon empfangen wird, mit einer erhöhten Klarheit gegenüber dem anderen Audio, das von der Vielzahl von Mikrofonen empfangen wird, ausgegeben wird, umfasst.

15. Computerlesbares Medium, das Anweisungen speichert, die bei Ausführung durch einen Computer den Computer zu Folgendem veranlassen:
Empfangen einer Angabe einer virtuellen Meeting-Sitzung zwischen einer ersten Rechenvorrichtung an einem ersten Meeting-Standort und einer zweiten Rechenvorrichtung an einem zweiten Meeting-Standort, wobei die erste Rechenvorrichtung mit einer an dem ersten Meeting-Standort positionierten Vielzahl von Mikrofonen verbunden ist;
Bereitstellen (402), an die zweite Rechenvorrichtung, einer Audiokarte des ersten Meeting-Standorts;
Empfangen (404), von der zweiten Rechenvorrichtung, einer Auswahl einer virtuellen Hörposition auf der Audiokarte;
Korrelieren (406) der virtuellen Hörposition mit einem ersten Mikrofon und einem zweiten Mikrofon der Vielzahl von Mikrofonen;
Empfangen (408), von der ersten Rechenvorrichtung, von Audio von der Vielzahl von Mikrofonen an dem ersten Meeting-Standort;
Priorisieren (410) von Audio, das von dem ersten Mikrofon und dem zweiten Mikrofon empfangen wird, gegenüber anderem Audio, das von der Vielzahl von Mikrofonen empfangen wird; und
Bereitstellen (412) des priorisierten Audios an die zweite Rechenvorrichtung.

## Revendications

1. Procédé (400), comprenant :
la réception d'une indication d'une session de réunion virtuelle entre un premier dispositif informatique situé dans un premier lieu de réunion et un second dispositif informatique situé dans un second lieu de réunion, dans lequel le premier dispositif informatique est connecté à une pluralité de microphones positionnés dans le premier lieu de réunion ;
la fourniture (402), au second dispositif informatique, d'une carte audio du premier lieu de réunion ;
la réception (404), à partir du second dispositif informatique, d'une sélection d'une première position d'écoute virtuelle sur la carte audio ;
la corrélation (406) de la première position d'écoute virtuelle sélectionnée à un premier microphone de la pluralité de microphones en attribuant un premier poids au premier microphone sur la base d'une distance à partir de la première position d'écoute virtuelle au premier microphone ;
la réception (408), à partir du premier dispositif informatique, d'audio à partir de la pluralité de microphones dans le premier lieu de réunion ;
la priorisation (410) d'audio reçu à partir du premier microphone par rapport aux autres audios reçus à partir de la pluralité de microphones sur la base du premier poids ; et
la fourniture (412) de l'audio prioritaire au second dispositif informatique.

2. Procédé selon la revendication 1, dans lequel la priorisation de l'audio reçu à partir du premier microphone comprend le fait d'amener l'audio reçu à partir du premier microphone à être émis par un haut-parleur à un niveau plus élevé que les autres audios reçus à partir de la pluralité de microphones.

3. Procédé selon la revendication 1 ou la revendication 2, dans lequel la corrélation de la première position d'écoute virtuelle sélectionnée au premier microphone comprend en outre :
la corrélation de la première position d'écoute virtuelle au premier microphone et au second microphone de la pluralité de microphones ;
l'attribution d'un second poids au second microphone sur la base d'une distance à partir de la première position d'écoute virtuelle au second microphone ; et
la priorisation de l'audio reçu à partir du second microphone sur la base du second poids.

4. Procédé selon la revendication 3, dans lequel la priorisation de l'audio comprend :
le fait d'amener l'audio reçu à partir du premier microphone à être émis au niveau d'un premier niveau sur la base du premier poids ; et
le fait d'amener l'audio reçu à partir du second microphone à être émis au niveau d'un second niveau sur la base du second poids.

5. Procédé selon la revendication 1, dans lequel la carte audio comprend, pour chacun de la pluralité de microphones :
des informations de localisation concernant un emplacement physique du microphone ; et
des informations de localisation concernant une zone audio correspondant à une zone spatiale au sein de laquelle le microphone capte l'audio.

6. Procédé selon la revendication 5, dans lequel la corrélation de la première position d'écoute virtuelle sélectionnée au premier microphone comprend en outre la détermination de la première position d'écoute virtuelle est incluse dans une première zone audio correspondant au premier microphone.

7. Procédé selon l'une quelconque des revendications précédentes, comprenant en outre :
le fait de comporter, dans la carte audio, une indication de la première position d'écoute virtuelle ; et
la fourniture de la carte audio au premier dispositif informatique pour affichage dans une interface utilisateur.

8. Procédé selon l'une quelconque des revendications 1, 2, 4 à 7, comprenant en outre :
la réception, à partir du second dispositif informatique, d'une sélection d'une seconde position d'écoute virtuelle sur la carte audio ;
la corrélation de la seconde position d'écoute virtuelle au second microphone de la pluralité de microphones ;
la réception, à partir du premier dispositif informatique, d'audio à partir de la pluralité de microphones dans le premier lieu de réunion ;
la priorisation de l'audio reçu à partir du second microphone ; et
la fourniture de l'audio prioritaire au second dispositif informatique.

9. Procédé selon l'une quelconque des revendications précédentes, dans lequel :
avant la fourniture de l'audio prioritaire au second dispositif informatique :
la fourniture de l'audio prioritaire à un service de traduction de langues ; et
la réception, à partir du service de traduction de langues, de l'audio prioritaire traduit d'une première langue vers une seconde langue ; et
la fourniture de l'audio prioritaire au second dispositif informatique comprend la fourniture de l'audio prioritaire traduit au second dispositif informatique.

10. Procédé selon l'une quelconque des revendications précédentes, comprenant en outre :
la réception d'informations de localisation concernant un emplacement physique d'un participant à la réunion dans le premier lieu de réunion ; et
le fait de comporter, dans la carte audio, une indication du lieu physique du participant à la réunion dans le premier lieu de réunion.

11. Procédé selon la revendication 10, dans lequel la réception des informations de localisation concernant la localisation physique du participant à la réunion comprend l'identification du participant de la réunion à l'aide d'au moins l'un des éléments suivants :
la reconnaissance faciale sur une vidéo de la session de réunion virtuelle ;
la reconnaissance vocale sur l'audio reçu ;
un badge d'identification ; ou
l'entrée manuelle de l'identité du participant à la réunion.

12. Procédé selon l'une quelconque des revendications précédentes, comprenant en outre :
la réception, à partir du second dispositif informatique, d'audio à partir d'un microphone dans le second lieu de réunion ;
le fait de déterminer si un locuteur du premier lieu de réunion est situé à proximité du premier microphone ; et
le fait d'amener l'audio reçu à partir du microphone du second lieu de réunion à être émis par le locuteur situé à proximité du premier microphone.

13. Système (100), comprenant :
un système de traitement (502) ; et
une mémoire (504) comprenant des instructions exécutables par ordinateur qui, lorsqu'elles sont exécutées, réalise des opérations comprenant :
la réception d'une indication d'une session de réunion virtuelle entre un premier dispositif informatique situé dans un premier lieu de réunion et un second dispositif informatique situé dans un second lieu de réunion, dans lequel le premier dispositif informatique est connecté à une pluralité de microphones positionnés dans le premier lieu de réunion ;
la fourniture (402), au second dispositif informatique, d'une carte audio du premier lieu de réunion ;
la réception (404), à partir du second dispositif informatique, d'une sélection d'une première position d'écoute virtuelle sur la carte audio ;
la corrélation (406) de la position d'écoute virtuelle au premier microphone de la pluralité de microphones ;
la réception (408), à partir du premier dispositif informatique, d'audio à partir de la pluralité de microphones dans le premier lieu de réunion ;
la priorisation (410) d'audio reçu à partir du premier microphone par rapport aux autres audios reçus à partir de la pluralité de microphones ; et
la fourniture (412) de l'audio prioritaire au second dispositif informatique.

14. Procédé selon la revendication 13, dans lequel la priorisation de l'audio reçu à partir du premier microphone comprend le fait d'amener l'audio reçu à partir du premier microphone à être émis à une clarté plus élevée que les autres audios reçus à partir de la pluralité de microphones.

15. Support lisible par ordinateur stockant des instructions qui, lorsqu'elles sont exécutées par un ordinateur, amènent l'ordinateur à :
recevoir une indication d'une session de réunion virtuelle entre un premier dispositif informatique situé dans un premier lieu de réunion et un second dispositif informatique situé dans un second lieu de réunion, dans lequel le premier dispositif informatique est connecté à une pluralité de microphones positionnés dans le premier lieu de réunion ;
fournir (402), au second dispositif informatique, une carte audio du premier lieu de réunion ;
recevoir (404), à partir du second dispositif informatique, une sélection de position d'écoute virtuelle sur la carte audio ;
corréler (406) la position d'écoute virtuelle au premier microphone au second microphone de la pluralité de microphones ;
recevoir (408), à partir du premier dispositif informatique, un audio à partir de la pluralité de microphones dans le premier lieu de réunion ;
prioriser (410) un audio reçu à partir du premier microphone et du second microphone par rapport aux autres audios reçus à partir de la pluralité de microphones ; et
fournir (412) l'audio prioritaire au second dispositif informatique.
